# EUROPÄISCHE PATENTSCHRIFT

(11) **EP 3 830 513 B1**
(45) Veröffentlichungstag und Bekanntmachung des Hinweises auf die Patenterteilung: **03.08.2022**
(21) Anmeldenummer: 19778876.3
(22) Anmeldetag: 18.09.2019
(51) Int. Cl.: F42B 19/24, F42D 5/04, H02K 7/14, H02K 21/44, H02K 19/12, H02K 23/22, H02K 23/24, H02K 23/04, H02K 19/10, H02K 21/28

(54) **DROHNE ZUR AUSLÖSUNG VON SEEMINEN MIT ELEKTRISCHEM ANTRIEB**
DRONE FOR TRIGGERING NAVAL MINES, HAVING AN ELECTRIC DRIVE
DRONE DE NEUTRALISATION DE MINES MARINES MUNI D'UN ENTRAÎNEMENT ÉLECTRIQUE

(30) Priorität: 09.10.2018 DE 102018217211
(43) Veröffentlichungstag der Anmeldung: 09.06.2021
(73) Patentinhaber: Siemens Energy Global GmbH & Co. KG, 81739 München (DE)
(72) Erfinder: GRUNDMANN, Jörn, 91091 Großenseebach (DE); WYCISK, Michael, 24248 Mönkeberg (DE)
(86) Internationale Anmeldenummer: PCT/EP2019/074933
(87) Internationale Veröffentlichungsnummer: WO 2020/074222

(56) Entgegenhaltungen:
- DE-A1- 19 537 009
- DE-A1-102016 203 341
- JP-A- 2016 007 132
- NL-A- 8 702 274
- US-A- 4 459 500
- GUBSER D U ED - OGATA MASAO: "Naval applications of SC magnet systems", PHYSICA C, NORTH-HOLLAND PUBLISHING, AMSTERDAM, NL, Bd. 341-348, 1. November 2000 (2000-11-01) , Seiten 2525-2528, XP004761796, ISSN: 0921-4534, DOI: 10.1016/S0921-4534(00)01303-4

## Beschreibung

Die vorliegende Erfindung betrifft eine Drohne zur Auslösung von Seeminen, welche einen Antrieb mit einem Elektromotor zur Fortbewegung im Wasser aufweist.

Bei bekannten Systemen zur Fernräumung von Seeminen werden unbemannte Drohnen eingesetzt, die zur Auslösung von Magnetminen mit magnetischen Spulen ausgestattet sind. Diese Spulen erzeugen starke Magnetfelder, die die Seeminen zur Detonation bringen können. Dabei sind die Drohnen so ausgeführt, dass sie durch die Detonation bei dem für die Auslösung typischen Abstand keinen Schaden nehmen.

Solche Drohnen können über ein eigenes Antriebssystem verfügen, beispielsweise verfügt die Deutsche Marine über fernsteuerbare Boote des Typs "Seehund", welche mit einem Dieselmotor ausgestattet sind. Die Magnetspule zur Auslösung der Minen ist hierbei in den Rumpf der fernsteuerbaren Boote integriert. Die Magnetspule selbst ist dabei typischerweise aus einer Vielzahl von Windungen aus Kupferkabel gebildet.

Neben solchen an der Oberfläche schwimmenden Drohnen sind auch Unterwasserdrohnen zur Minenräumung bekannt, die entweder auch über einen eigenen Antrieb verfügen oder von anderen (Unter-)Wasserfahrzeugen gezogen werden können. Auch dort ist jedoch nach dem Stand der Technik die Magnetspule als von der Antriebsvorrichtung getrennte Einheit ausgebildet.

Nachteilig an diesen herkömmlichen Minenräumdrohnen ist, dass sie durch das große Gewicht der für die starken Magnetfelder benötigten Magnetspulen sehr schwer und meist auch relativ groß sind. So ist der Transport solcher Drohnen zu unterschiedlichen Einsatzorten relativ aufwendig, besonders ein Transport mit dem Flugzeug wird durch das hohe Gewicht erheblich erschwert. Bei Drohnen mit eigenem Antrieb trägt der Antriebsmotor zusätzlich zum hohen Gewicht und Volumen bei. Weiterhin ist für den Antrieb auch noch zusätzlich eine Energiezufuhr nötig, beispielsweise in Form von Treibstoff für einen Dieselmotor oder auch in Form von elektrisch gespeicherter Energie für einen Elektromotor.

In der DE102016203341A1 wird eine Drohne zur Auslösung von Seeminen mittels eines externen Magnetfeldes beschrieben, wobei hier das Magnetfeld durch den Betrieb des für den Antrieb verwendeten Elektromotors erzeugt wird. Hierzu weist der für den Antrieb verwendete Elektromotor eine vergleichsweise schwache magnetische Abschirmung auf, sodass das Magnetfeld des Motors weit nach außen vordringen kann. Bei diesem Elektromotor ist die Erregereinheit mit den magnetfelderzeugenden Elementen (also beispielsweise Permanentmagneten oder Magnetspulen) auf dem Rotor angeordnet. Das so erzeugte Erregerfeld, dass sich durch die geringe Abschirmung weit in die stationäre äußere Umgebung der Drohne erstrecken kann, ist also ein magnetisches Wechselfeld, bei dem sich die räumliche Orientierung der magnetischen Pole periodisch dreht. Somit ist eine derartige Minenräumdrohne nur für solche Seeminen geeignet, welche zur Detonation durch magnetische Wechselfelder mit einer passenden Drehfrequenz ausgelegt sind. Hierdurch ist der Anwendungsbereich derartiger Minenräumdrohnen begrenzt.

Aufgabe der Erfindung ist es daher, eine Drohne zur Auslösung von Seeminen mittels eines externen Magnetfeldes anzugeben, welche die genannten Nachteile überwindet. Insbesondere soll eine Drohne zur Verfügung gestellt werden, welche vergleichsweise klein und leicht ausgebildet sein kann und trotzdem über einen eigenen Antrieb sowie ein für viele Typen von Seeminen verwendbares magnetisches Auslösesystem verfügt.

Diese Aufgaben werden durch die in Anspruch 1 beschriebene Drohne gelöst. Die erfindungsgemäße Drohne ist zur Auslösung von Seeminen geeignet. Sie weist einen Antrieb mit einem Elektromotor zur Fortbewegung im Wasser auf. Dieser Elektromotor ist beim Betrieb der Drohne zusätzlich zur Auslösung der Seeminen nutzbar und zwar mittels eines durch den Betrieb des Elektromotors ausgebildeten externen Magnetfeldes. Der Elektromotor umfasst einen feststehenden Stator und einen im Verhältnis zum Stator drehbar gelagerten Rotor. Dabei weist der Stator wenigstens ein magnetisches oder elektromagnetisches Element zur Ausbildung eines Erregerfeldes auf. Der Rotor weist wenigstens eine Ankerwicklung auf, die beim Betrieb des Elektromotors elektromagnetisch in Wechselwirkung mit dem Erregerfeld tritt, wodurch ein übergeordnetes Magnetfeld ausgebildet wird. Dass hierdurch beim Betrieb des Elektromotors im Bereich außerhalb des Elektromotors gebildete externe Magnetfeld ist dabei als magnetisches Gleichfeld ausgebildet.

Bei dem Elektromotor der erfindungsgemäßen Drohne ist also die Erregereinrichtung - mit anderen Worten die Einrichtung, die das wenigstens eine magnetische oder elektromagnetische Element zur Ausbildung eines Erregerfeldes aufweist - im feststehenden Stator angeordnet. Unter dem Begriff "feststehend" soll im vorliegenden Zusammenhang eine feststehende Anordnung innerhalb des Bezugssystems der Drohne verstanden werden, innerhalb dessen der Elektromotor montiert ist. Die Drohne als Ganzes soll natürlich trotzdem wie beschrieben im Wasser beweglich und somit nicht absolut gesehen feststehend sein. Durch die Anordnung der Erregereinrichtung auf dem feststehenden Stator wird somit erreicht, dass das erzeugte magnetische Erregerfeld im räumlichen Bezugssystem der Drohne ein magnetisches Gleichfeld ist.

Durch die elektromagnetische Wechselwirkung des Erregerfeldes mit der rotierenden Ankerwicklung des Rotors wird insgesamt ein übergeordnetes Magnetfeld ausgebildet, welches aufgrund der Wechselwirkung mit den rotierenden Komponenten nicht vollständig konstant ist. Vielmehr wird als übergeordnetes Magnetfeld ein magnetisches Gleichfeld ausgebildet, welches eine pulsierende - also eine periodisch veränderliche - Amplitude aufweist. Im Unterschied zu einem magnetischen Wechselfeld liegt hier jedoch keine periodische Drehung der räumlichen Lage der magnetischen Pole vor. Daher wird es trotz der Amplitudenvariation als magnetisches Gleichfeld bezeichnet.

Unter der genannten Ankerwicklung (die im englischen auch als "Armature Winding" bezeichnet wird) soll hier allgemein die Wicklung des Motors verstanden werden, die mit dem Erregerfeld der Erregereinrichtung in elektromagnetische Wechselwirkung tritt. Bei einem Elektromotor ist dies allgemein die Wicklung, über die elektrische Energie in den Motor eingebracht wird. Dies gilt unabhängig davon, ob der Elektromotor als Gleichstrommotor oder als Synchronmotor ausgebildet ist. Beide Varianten können im Rahmen der Erfindung vorteilhaft realisiert werden, wobei die Ausgestaltung als Synchronmaschine mit rotierender Ankerwicklung im Stand der Technik insgesamt eher unüblich ist.

Der Elektromotor der erfindungsgemäßen Drohne ist so ausgelegt, dass bei seinem Betrieb ein zur Auslösung von Seeminen geeigneter magnetischer Fluss in einen Bereich außerhalb des Elektromotors vordringen kann. Hierzu ist der Elektromotor als Ganzes so ausgebildet, dass ein Vordringen eines derart hohen Teils des magnetischen Flusses in diese außenliegenden Bereiche außerhalb des Elektromotors nicht verhindert wird. Er soll also insgesamt eine vergleichsweise schwache magnetische Abschirmung aufweisen. Dies kann insbesondere durch die Wahl geeigneter, schwach magnetisch abschirmender Materialien im Bereich eines gegebenenfalls vorliegenden Motorgehäuses, Statorträgers und/oder Rotorträgers erreicht werden.

Ein wesentlicher Vorteil der erfindungsgemäßen Drohne liegt darin, dass das beim Betrieb des Elektromotors für den Antrieb genutzte Magnetfeld zusätzlich zur Auslösung der Seeminen genutzt werden kann. Bei herkömmlichen Elektromotoren wird das Vordringen von magnetischem Fluss in außenliegende Bereiche typischerweise verhindert, unter anderem um übliche Vorgaben zur elektromagnetischen Verträglichkeit einzuhalten. Hierzu werden magnetisch flussführende Materialien eingesetzt, die den magnetischen Fluss um die innenliegenden Komponenten des Motors herum ringförmig schließen und ein Vordringen des Flusses in außerhalb des Motors liegende Bereiche vermeiden. Eine derartige magnetische Abschirmung wird bei dem Elektromotor der erfindungsgemäßen Drohne vorteilhaft vermieden.

Beim Betrieb von Minenräumdrohnen in minenbelasteten Gewässern sind die genannten Vorgaben zur elektromagnetischen Verträglichkeit allgemein unerheblich, und auf die übliche Abschirmung des magnetischen Flusses kann verzichtet werden. So kann erreicht werden, dass der Elektromotor eine Doppelfunktion erfüllt, indem er nicht nur für den Antrieb, sondern auch für die Minenauslösung genutzt wird. Es werden das Gewicht und der Platz für eine zusätzliche Magnetspule eingespart, und die Drohne kann im Vergleich zum Stand der Technik besonders leicht und klein ausgeführt werden. Sie ist dadurch vorteilhaft auch gut transportabel sowie energiesparend zu betreiben.

Ein wesentlicher Vorteil der erfindungsgemäßen Drohne im Vergleich zu Drohne der DE102016203341A1 ist darin zu sehen, dass das zur Minenauslösung verwendete externe Magnetfeld hier als magnetisches Gleichfeld ausgebildet ist. Hierdurch wird der Einsatzbereich einer solchen Minenräumdrohne auf solche Seeminen ausgedehnt, die durch ein magnetisches Gleichfeld detoniert werden können.

Vorteilhafte Ausgestaltungen und Weiterbildungen der Erfindung gehen aus den von Anspruch 1 abhängigen Ansprüchen sowie der folgenden Beschreibung hervor.

So kann der Elektromotor gemäß einer ersten vorteilhaften Ausführungsvariante so ausgebildet sein, dass der Rotor radial innerhalb des Stators angeordnet ist. Mit anderen Worten kann es sich um eine sogenannte Innenrotor- oder Innenläufermaschine handeln. Diese Ausführungsvariante ist im Zusammenhang mit der vorliegenden Erfindung allgemein besonders bevorzugt, weil sich die Erregereinrichtung dann im außenliegenden Stator befindet und somit besonders leicht durch die Erregereinrichtung ein magnetisches Gleichfeld erzeugt werden kann, welches bei entsprechend schwacher Abschirmung des Motors vom radial außenliegenden Stator aus in die umgebenden Bereiche außerhalb des Motors vordringen kann. Ein Vorteil dieser Ausführungsvariante ist beispielsweise, dass die Komponenten des Rotors, wenn dieser radial innen liegt, nicht zu einer unerwünschten magnetischen Abschirmung des Erregerfeldes nach außen hin beitragen. Hierdurch kann ein vergleichsweise hohes externes magnetisches Gleichfeld erzeugt werden, wenn ein zweckmäßig vorhandenes Motorgehäuse und ein zweckmäßig vorhandener Statorträger jeweils entsprechend schwach magnetisch abschirmend ausgeführt werden.

Gemäß einer zweiten vorteilhaften Ausführungsvariante ist es jedoch grundsätzlich auch möglich, dass der Stator radial innerhalb des Rotors angeordnet ist. Bei einer solchen Ausführungsform ist die Erregereinrichtung dann auf einem kleineren Radius angeordnet als die Ankerwicklung. Bei einer entsprechend schwach magnetisch abschirmenden Ausgestaltung eines zweckmäßig vorhandenen Rotorträgers kann auch bei dieser Variante ein entsprechend hohes und zur Auslösung von Seeminen geeignetes externes magnetisches Gleichfeld erzeugt werden. Durch die elektromagnetische Wechselwirkung des Erregerfeldes mit der hier außenliegenden rotierenden Ankerwicklung des Rotors wird allerdings bei dieser Variante eine stärkere periodische Änderung in der Amplitude des externen magnetischen Gleichfeldes erzeugt. Für die Auslösung bestimmter Seeminen, die zur Detonation eine ganz bestimmte magnetische Signatur benötigen, kann dies unter Umständen aber auch vorteilhaft sein.

Allgemein vorteilhaft kann der Stator des Elektromotors einen Statorträger aufweisen. Ein solcher Statorträger kann zweckmäßig dazu ausgebildet sein, die Erregereinrichtung - also das wenigstens eine magnetische und oder elektromagnetisches Element zur Ausbildung eines Erregerfeldes - mechanisch zu tragen. Die Erregereinrichtung kann dabei prinzipiell radial innenliegend oder außenliegend auf dem Statorträger angebracht sein oder auch in diesen eingebettet sein. Alternativ oder zusätzlich kann der Rotor des Elektromotors einen Rotorträger aufweisen. Ein solcher Rotorträger kann zweckmäßig dazu ausgebildet sein, die Ankerwicklung mechanisch zu tragen.

Im Zusammenhang mit der vorliegenden Erfindung ist es allgemein besonders bevorzugt, wenn die magnetischen Eigenschaften des Statorträgers und/oder des Rotorträgers so ausgebildet sind, dass beim Betrieb des Elektromotors ein magnetischer Fluss von wenigstens 0,5 mT in einen Bereich außerhalb des Elektromotors vordringen kann. Wenn es sich um eine Innenrotormaschine handelt, der Stator also radial außen angeordnet ist, sind für eine solche hinreichend schwache Abschirmung des magnetischen Flusses im Wesentlichen die magnetischen Eigenschaften des Statorträgers maßgeblich. Wenn allerdings der Stator bei einer Außenrotormaschine radial innen angeordnet ist, sind zweckmäßig sowohl Rotorträger als auch Statorträger aus hinreichend schwach magnetisch abschirmenden Materialien gebildet.

Ganz allgemein und unabhängig von der genauen Ausgestaltung des Elektromotors und der sonstigen Drohne wird durch einen externen magnetischen Fluss von wenigstens etwa 0,5 mT eine Auslösung von typischen Seeminen ermöglicht.

Um die beschriebene vergleichsweise schwache magnetische Abschirmung zu erreichen, kann der Statorträger und/oder der Rotorträger wenigstens abschnittsweise aus einem Material ausgebildet sein, welches eine effektive Permeabilitätszahl µᵣ - auch relative Permeabilität genannt - von höchstens 300 aufweist. Besonders vorteilhaft liegt die effektive Permeabilitätszahl µᵣ nur bei höchstens 10 oder sogar nur bei höchstens 5. Durch die Wahl eines derart amagnetischen Materials kann erreicht werden, dass der magnetische Fluss den jeweiligen Träger ausreichend gut durchdringen kann.

Beispielsweise kann der Statorträger und/oder der Rotorträger wenigstens abschnittsweise aus einem Material ausgebildet sein, welches einen amagnetischen Stahl und/oder Kunststoff umfasst. Ein solches kunststoffhaltiges Material kann beispielsweise vorteilhaft ein Harz, ein Thermoplast, ein Duroplast und/oder ein glasfaserverstärkter Kunststoff sein.

Der Elektromotor kann allgemein weiterhin ein Gehäuse aufweisen, welches vorteilhaft ebenfalls amagnetisch ausgebildet ist. So kann erreicht werden, dass der magnetische Fluss auch ein solches Motorgehäuse durchdringt, und dass ein ausreichend hohes externes Magnetfeld zum Auslösen einer Magnetmine erzeugt werden kann.

Allgemein und unabhängig von der jeweiligen Konfiguration des Elektromotors kann dieser so ausgebildet sein, dass im Betrieb des Elektromotors das durch das übergeordnete Magnetfeld außerhalb des Elektromotors gebildete externe Magnetfeld dort zumindest in einem Teilbereich eine magnetische Flussdichte von wenigstens 5 mT, insbesondere wenigstens 50 mT oder sogar wenigstens 500 mT aufweist. Mit derart hohen magnetischen Flussdichten kann auch aus relativ großer Entfernung eine Magnetmine detoniert werden. Insbesondere können auch außerhalb der Drohne derart hohe magnetische Flussdichten realisiert werden. Hierzu kann auch eine Außenwand der Drohne aus amagnetischem Material gebildet sein. Unter einem amagnetischen Material soll im Zusammenhang mit der vorliegenden Erfindung allgemein ein Material mit einer relativen Permeabilität µᵣ von höchstens 300 verstanden werden.

Durch die beschriebene amagnetische Ausgestaltung des jeweils außenliegenden Trägers und den hierdurch fehlenden magnetischen Ringschluss kann die magnetische Kopplung zwischen Stator und Rotor im Vergleich zu herkömmlichen Motoren deutlich reduziert sein. Dies kann ohne zusätzliche Anpassungen zu einer geringeren Leistung des Elektromotors führen. Um dies zu kompensieren, können zusätzliche Maßnahmen ergriffen werden, wie zum Teil weiter unten genauer beschrieben wird. So können supraleitende Elemente im Stator und/oder im Rotor zum Einsatz kommen, um bei vergleichbarer oder sogar kleinerer Baugröße stärkere elektromagnetische Wechselwirkungen zu erzeugen. Es können aber auch bei normalleitenden Komponenten Maßnahmen ergriffen werden, um die niedrigere Kopplung zu kompensieren. So kann der Motor beispielsweise in axialer Richtung länger ausgeführt werden, als es bei einem vergleichbaren Motor mit außenliegendem Eisenjoch der Fall wäre. Alternativ kann die Windungszahl erhöht werden und/oder es können im Falle permanentmagnetischer Erregung stärkere Permanentmagnete verwendet werden.

Allgemein und unabhängig von der genauen Anordnung von Rotor und Stator kann der Elektromotor besonders vorteilhaft als Gleichstrommotor ausgebildet sein. Es handelt sich dann also um einen Gleichstrommotor mit einer Erregereinrichtung im Stator, was bei Gleichstrommotoren eine relativ häufige Realisierungsform ist. Die Erregereinrichtung des Stators kann dabei insbesondere wenigstens einen Permanentmagneten und/oder wenigstens eine elektrische Erregerspule aufweisen.

Ein Gleichstrommotor ist allgemein ein Elektromotor, welcher mit Gleichstrom betrieben wird. Besonders vorteilhaft ist ein solcher Gleichstrommotor als Innenrotormaschine ausgebildet, denn dies ist eine häufig verwendete Bauform und es kann durch den außenliegenden Stator relativ leicht ein starkes externes Magnetfeld ausgebildet werden. Dies ist allerdings nicht zwingend nötig und es kann prinzipiell auch eine Außenrotormaschine als Gleichstrommotor zum Einsatz kommen.

Ein wesentlicher Vorteil beim Einsatz eines Gleichstrommotors als Elektromotor der Drohne liegt darin, dass insbesondere bei einer vorliegenden Energieversorgung durch eine Gleichstromquelle kein zusätzlicher Wechselrichter benötigt wird. Eine solche Gleichstromquelle kann beispielsweise durch eine Batterie und/oder eine Brennstoffzelle an Bord der Drohne gegeben sein. Beim Einsatz einer Brennstoffzelle ist deren Betrieb mit Wasserstoff besonders vorteilhaft. Dies trifft besonders dann zu, wenn der Elektromotor wenigstens ein supraleitendes Element aufweist, welches mithilfe von flüssigem Wasserstoff auf eine kryogene Betriebstemperatur gekühlt wird. In einem solchen Fall kann der für die Kühlung verwendete Wasserstoff zusätzlich als Brennstoff für die Brennstoffzelle eingesetzt werden.

Ein solcher Gleichstrommotor kann im Bereich seines Rotors (insbesondere radial eines innenliegenden Rotors) einen Kommutator und ein oder mehrere Bürsten aufweisen. Ein solcher Kommutator ist ein mechanischer Wechselrichter, welcher einen von einer Stromquelle zugeführten Gleichstrom in einen lokal im Rotor benötigten Wechselstrom konvertiert. Er wird manchmal auch als Kollektor bezeichnet. Die Konvertierung geschieht auf relativ einfache Weise durch eine mechanische Änderung der Kontaktierung des Rotors mit feststehenden Stromzuführungen während der Drehung des Rotors. Ein solcher Kommutator wird daher auch als Polwender bezeichnet. Die Bürsten dienen insbesondere zur elektrischen Kontaktierung zwischen den elektrischen Komponenten des Rotors und feststehenden Stromzuführungen.

Der Stator des Gleichstrommotors kann zusätzlich zu dem wenigstens einen magnetischen und/oder elektromagnetischen Element zur Ausbildung eines Erregerfeldes - also zusätzlich zur primären Erregereinrichtung - noch weitere magnetische und oder elektromagnetischen Elemente aufweisen. Beispielsweise können zusätzlich zu einer Erregerwicklung optional ein oder mehrere Wendepolwicklungen in den Bereichen zwischen den magnetischen Polen angeordnet sein. Weiterhin können optional zusätzlich ein oder mehrere Kompensationswicklungen im Bereich des Stators angeordnet sein. Diese optionalen Wendepolwicklungen und Kompensationswicklungen können beispielsweise insbesondere bei größeren Gleichstrommotoren zum Einsatz kommen, um das insgesamt ausgebildete Erregerfeld auf eine gewünschte Weise zu formen.

Bei den Ausführungsformen, bei denen der Elektromotor als Gleichstrommotor ausgebildet ist und dieser im Bereich des Stators eine Erregerwicklung aufweist, spricht man von einem elektrisch erregten Gleichstrommotor. Hierbei kommen grundsätzlich unterschiedliche Ausführungsformen in Betracht, die sich nach der Art der elektrischen Verbindung zwischen der Erregerwicklung und der Ankerwicklung unterscheiden. Beispielsweise kann es sich um eine Reihenschlussmaschine handeln, bei welcher Erregerwicklung und Ankerwicklung elektrisch in Reihe geschaltet sind. Alternativ kann es sich um eine Nebenschlussmaschine handeln, bei welcher Erregerwicklung und Ankerwicklung elektrisch parallelgeschaltet sind. Gemäß einer weiteren Alternative kann es sich aber auch um eine fremderregte Maschine handeln, bei der die Stromkreise von Erregerwicklung und Ankerwicklung elektrisch unabhängig voneinander ausgestaltet sind. Die letztgenannte Variante ist im Zusammenhang mit supraleitenden Erregerwicklungen besonders bevorzugt, um eine möglichst weitgehende Entkopplung der typischerweise hochinduktiven supraleitenden Erregerwicklung von den übrigen Komponenten zu erreichen.

Gemäß einer weiteren bevorzugten Ausführungsvariante kann der Elektromotor der Drohne aber auch als Synchronmotor ausgebildet sein. Es handelt sich dann also um einen Synchronmotor mit einer Erregereinrichtung im Stator, was bei Synchronmotoren eine relativ seltene Realisierungsform ist. Besonders vorteilhaft ist ein solcher Synchronmotor als Innenrotormaschine ausgebildet, denn so kann durch den außenliegenden Stator relativ leicht ein starkes externes Magnetfeld ausgebildet werden. Dies ist allerdings nicht zwingend nötig und es kann prinzipiell auch eine Außenrotormaschine als Synchronmotor zum Einsatz kommen.

Ein wesentlicher Vorteil der Verwendung eines Synchronmotors ist, dass im Unterschied zum Gleichstrommotor kein Kommutator und unter Umständen auch keine Bürsten benötigt werden. Allerdings wird eine Wechselstromquelle benötigt. Bei Ausführungsformen, bei denen die Drohne für die Energieversorgung des Elektromotors eine Gleichstromquelle aufweist (beispielsweise eine Batterie oder eine Brennstoffzelle), wird dann zusätzlich ein Wechselrichter benötigt, der für den relevanten Leistungsbereich ausgelegt sein muss. Falls der Wechselstrom insgesamt im feststehenden Bereich der Drohne zur Verfügung gestellt wird, wird zusätzlich eine Übertragungseinheit für die Übertragung des Wechselstroms vom feststehenden in den rotierenden Teil der Maschine benötigt. Hierfür können unter Umständen dann doch Bürsten und/oder Schleifring-Kontakte zum Einsatz kommen.

Bei der Verwendung eines Synchronmotors in der Drohne ist die Strangzahl nicht notwendigerweise auf drei festgelegt. Ein Vorteil einer niedrigeren Strangzahl - insbesondere einer Strangzahl von zwei - kann darin gesehen werden, dass die Anzahl der benötigten Schleifringe zur Übertragung des Wechselstroms vom feststehenden in rotierenden Teil entsprechend reduziert ist.

Allgemein vorteilhaft und unabhängig von der sonstigen Ausgestaltung des Elektromotors kann das im Stator angeordnete, wenigstens eine Element zur Ausbildung eines Erregerfeldes ein Permanentmagnet sein. Ein wesentlicher Vorteil bei der Verwendung eines solchen Permanentmagneten ist, dass für die Ausbildung des Erregerfeldes im Gegensatz zur Verwendung einer Erregerspule keine zusätzliche elektrische Energieversorgung im Bereich des Stators benötigt wird. Bei dem wenigstens einen Permanentmagneten kann es sich grundsätzlich entweder um einen herkömmlichen Permanentmagneten (typischerweise auf der Basis von Seltenen-Erd-Materialien wie beispielsweise NdFeB) oder um einen supraleitenden Permanentmagneten handeln.

Alternativ zu der vorgenannten Ausführungsform kann das im Stator angeordnete, wenigstens eine Element zur Ausbildung eines Erregerfeldes aber auch eine elektrische Erregerspule sein. Eine solche elektrische Erregerspule kann prinzipiell auch zusätzlich zu einem Permanentmagneten als Teil der Erregereinrichtung vorliegen. Insbesondere beim Einsatz einer supraleitenden Erregerspule kann bei dieser Variante bei einer vergleichsweise geringen benötigten Leistung (welche die Kühlleistung zur Kühlung des Supraleiters einschließt) eine vergleichsweise hohe magnetische Flussdichte, insbesondere auch außerhalb des Elektromotors, erreicht werden.

Allgemein vorteilhaft und unabhängig von der genauen Ausgestaltung des Elektromotors kann dieser wenigstens ein supraleitendes Element umfassen. Mit solchen supraleitenden Materialien können mit relativ kleinen und leichten Komponenten vergleichsweise hohe Magnetfelder erzeugt werden, was zu dem Ziel, eine kleine und leichte Drohne zur Verfügung zu stellen, in besonders vorteilhafter Weise beiträgt. Prinzipiell können die elektrischen Komponenten des Rotors und des Stators aber auch ausschließlich normalleitende Komponenten aufweisen, und die Grundidee der vorliegenden Erfindung kann trotzdem verwirklicht werden.

Vorteilhaft kann der Stator des Elektromotors insbesondere wenigstens einen Block aus supraleitendem Material umfassen, in welchem ein magnetischer Fluss derart aufgeprägt werden kann, dass der wenigstens eine Block wie ein Permanentmagnet wirkt. Insbesondere kann es sich bei einem solchen Block um einen Block aus Bulk-Supraleitermaterial handeln. Es können besonders vorteilhaft auch mehrere solcher Blöcke vorliegen, um ein besonders hohes, konstantes Magnetfeld zu erzeugen.

Zum Aufprägen eines permanenten magnetischen Flusses in Supraleitern stehen verschiedene Verfahren zur Verfügung, die im Stand der Technik bekannt sind. So kann beispielsweise bei einer Temperatur oberhalb der Sprungtemperatur am Ort des Supraleiters mit einer externen Magnetspule oder auch einem Permanentmagneten ein magnetischer Fluss aufgeprägt werden, der dann durch Abkühlung auf eine Temperatur unterhalb der Sprungtemperatur des Supraleiters im supraleitenden Material eingefroren wird. Solche Verfahren sind im Stand der Technik unter den englischen Begriffen "Field Cooling" und "Zero Field Cooling" bekannt. Eine alternative Methode ist die Methode der Flusspumpe. Hierbei wird bei einer kryogenen Temperatur unterhalb der Sprungtemperatur über Magnetfeldpulse eine Magnetisierung im supraleitenden Material aufgeprägt. All diesen Methoden ist gemeinsam, dass nach Entfernen des externen Magneten, der zur Aufmagnetisierung verwendet wird, der magnetische Fluss im Supraleiter erhalten wird und dieser als Permanentmagnet wirkt, solange er auf einer Temperatur unterhalb seiner Sprungtemperatur gehalten wird.

Alternativ oder zusätzlich zu der Ausführungsform mit massiven Blöcken aus durchgehend supraleitendem Material können solche Blöcke auch jeweils aus einer Mehrzahl supraleitender Bandleiter zusammengesetzt sein. Insbesondere kann ein solcher Block als Stapel von solchen Bandleitern gebildet sein. Auch hier kann dann in dem jeweiligen Block ein magnetischer Fluss derart eingeprägt werden, dass der Block wie ein Permanentmagnet wirkt, wie oben beschrieben.

Allgemein weisen alle Ausführungsformen, bei denen ein magnetischer Fluss permanent auf ein supraleitendes Material des Stators aufgeprägt wird, den Vorteil auf, dass zur Aufrechterhaltung des Erregerfeldes keine Energie benötigt wird. Dementsprechend werden auch keine Stromzuführungen von der wärmen äußeren Umgebung zur kryogenen Umgebung des Supraleitermaterials benötigt, und die thermischen Verluste bei der Kühlung des Supraleiters auf eine Temperatur unterhalb seiner Sprungtemperatur können vorteilhaft geringgehalten werden. Da solche supraleitenden Komponenten nicht nur leicht aufmagnetisiert, sondern auch leicht entmagnetisiert werden können - beispielsweise durch Erwärmung - können sie auch leicht transportiert werden. Beispielsweise können dann Vorgaben zur elektromagnetischen Verträglichkeit leicht eingehalten werden, wenn die supraleitenden Komponenten der Drohne nicht magnetisiert sind, solange diese nicht im Einsatz ist.

Alternativ oder zusätzlich zu dem als Permanentmagnet wirkenden Supraleiter kann der Stator wenigstens eine supraleitende Erregerspule aufweisen. Eine solche Erregerwicklung des Stators kann beispielsweise über eine Gleichstromquelle mit elektrischer Energie versorgt werden. Aufgrund der vernachlässigbaren elektrischen Verluste einer solchen supraleitenden Erregerwicklung ist es aber grundsätzlich auch möglich, diese Wicklung im Quasi-Dauerkurzschlussstrommodus (englisch: "quasi persistent current mode") zu betreiben. Dies ist vor allem bei solchen Ausführungsformen interessant, bei denen das Magnetfeld im kurzgeschlossenen Betriebsmodus mit weniger als 1% pro Stunde abfällt. Dann kann die Erregerwicklung einer solchen Drohne vor ihrem Einsatz mit einer externen Stromquelle aufgeladen werden, und die Erregerwicklung der Drohne kann während ihres Einsatzes von beispielsweise einigen Stunden ohne eine Stromquelle für die Erregerwicklung(en) betrieben werden. Bei einer solchen Ausführungsform kann auch auf elektrische Anschlüsse der Erregerwicklung verzichtet werden, wodurch die thermischen Verluste in der tiefkalten Umgebung der supraleitenden Wicklung(en) reduziert werden können.

Grundsätzlich können mit supraleitenden Erregerspulen bei ähnlicher Größe und Bauform deutlich stärkere Magnetfelder realisiert werden als mit herkömmlichen normalleitenden Erregerspulen. Oder anders ausgedrückt, kann der Elektromotor bei ähnlicher Leistung und ähnlichem magnetischem Fluss kleiner und leichter ausgeführt werden als mit normalleitenden Wicklungen, beispielsweise herkömmlichen Kupferwicklungen. Der Energiebedarf ist durch die niedrigen Verluste ebenfalls niedriger als mit herkömmlichen Leitern, so dass selbst bei einem dauerhaft gespeisten Betrieb weniger elektrische Leistung benötigt wird, und ein Energiespeicher der Drohne dementsprechend auf einen geringeren Energieverbrauch ausgelegt werden kann.

Alternativ oder zusätzlich zu den beschriebenen supraleitenden Komponenten im Stator kann der Elektromotor auch so ausgestaltet sein, dass seine Ankerwicklung im Rotor einen supraleitenden elektrischen Leiter umfasst. Auch hier können bei gleichem Bauvolumen im Vergleich zu herkömmlichen Kupferwicklungen deutlich höhere Ströme und/oder deutlich höhere Windungszahlen realisiert werden. Alternativ oder zusätzlich kann auch das Bauvolumen und damit auch das Gewicht der Drohne im Vergleich zu einem Motor mit normalleitenden Materialien reduziert werden.

Allgemein und unabhängig davon, ob das supraleitende Material im Rotor und/oder im Stator zum Einsatz kommt, kann dieses Material als hochtemperatursupraleitendes Material ausgestaltet sein. Hochtemperatursupraleiter (HTS) sind supraleitende Materialien mit einer Sprungtemperatur oberhalb von 25 K und bei einigen Materialklassen oberhalb von 77 K, bei denen die Betriebstemperatur durch Kühlung mit anderen kryogenen Materialien als flüssigem Helium erreicht werden kann. HTS-Materialien sind auch deshalb besonders attraktiv, da diese Materialien abhängig von der Wahl der Betriebstemperatur hohe obere kritische Magnetfelder sowie hohe kritische Stromdichten aufweisen können. Mit ihnen können daher besonders leicht hohe Magnetfelder erzeugt werden.

Besonders vorteilhaft kann ein solches hochtemperatursupraleitendes Material Magnesiumdiborid und/oder ein Material des Typs REBa₂Cu₃Oₓ, umfassen, wobei RE für ein Element der seltenen Erden oder eine Mischung solcher Elemente steht. Bei supraleitenden Wicklungen im Rotor und/oder im Stator kann der supraleitende Leiter vorteilhaft als Bandleiter ausgeführt sein.

Die Drohne kann vorteilhaft einen Energiespeicher zur Speicherung von elektrischer oder chemischer Energie für den Betrieb des Elektromotors aufweisen. Insbesondere kann die Drohne eine elektrische Batterie und/oder eine Brennstoffzelle aufweisen und/oder sie kann einen Treibstofftank für einen elektrischen Generator aufweisen. Alternativ kann die Drohne jedoch prinzipiell auch während des Einsatzes kabelgebunden von einer Steuerungsanlage, beispielsweise einem größeren Schiff aus, mit Energie versorgt werden.

Die Drohne kann vorteilhaft so ausgestaltet sein, dass der Elektromotor das alleinige magnetische Auslösesystem zur Auslösung von Seeminen bildet. Es sind dann also insbesondere keine weiteren Magnetspulen oder Permanentmagnete zur Erzeugung eines externen Magnetfeldes oberhalb der Auslöseschwelle von Seeminen vorhanden. Bei einer solchen Ausführungsform kann allerdings ohne weiteres noch ein zusätzliches akustisches Auslösesystem zum Auslösen von Geräuschminen vorhanden sein. Prinzipiell ist es auch denkbar, dass noch ein weiteres magnetisches Auslösesystem vorliegt, beispielsweise wenn ein vom Magnetfeld des Elektromotors abweichender magnetischer Flussverlauf erzeugt werden soll oder wenn ein zeitlich veränderlicher Magnetfluss erzeugt werden soll.

Besonders vorteilhaft kann der Elektromotor eine Polpaarzahl p zwischen 1 und 5 aufweisen. Bei einer solchen vergleichsweise niedrigen Polpaarzahl kann relativ leicht ein Magnetfluss mit einer relativ hohen radialen Reichweite nach außen erzeugt werden. Somit kann leicht ein relativ hohes externes Magnetfeld zum Auslösen der Minen zur Verfügung gestellt werden.

Die Drohne kann vorteilhaft dazu ausgestaltet sein, unter Wasser bewegt zu werden. Alternativ dazu kann sie grundsätzlich aber auch als eine an einer Wasseroberfläche schwimmende Drohne ausgestaltet sein.

Nachfolgend wird die Erfindung anhand einiger bevorzugter Ausführungsbeispiele unter Bezugnahme auf die angehängten Zeichnungen beschrieben, in denen:
Figur 1 eine Drohne 1 im schematischen Längsschnitt zeigt und
Figuren 2 bis 5 beispielhafte Elektromotoren 3 im schematischen Querschnitt zeigen.

In den Figuren sind gleiche oder funktionsgleiche Elemente mit gleichen Bezugszeichen versehen.

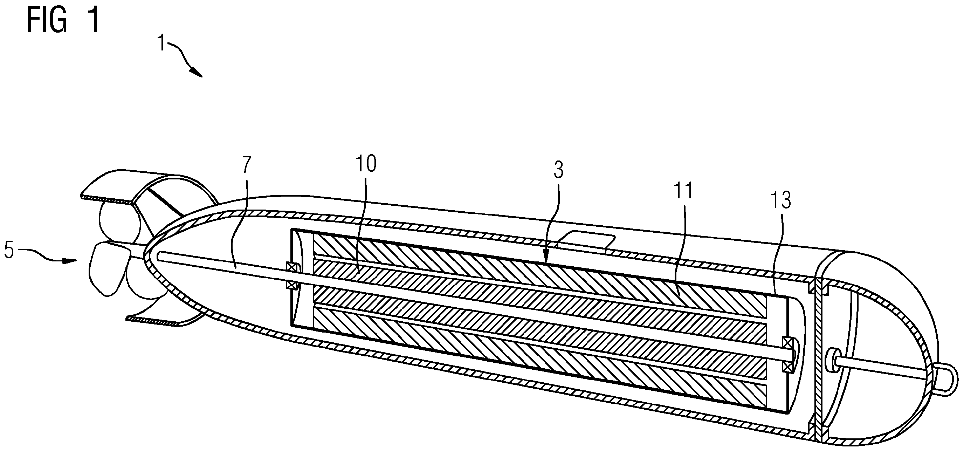

In Figur 1 ist eine Drohne 1 nach einem ersten Ausführungsbeispiel der Erfindung im schematischen Längsschnitt gezeigt. Gezeigt ist eine länglich geformte Drohne, die zur Fortbewegung unter Wasser ausgelegt ist. Sie weist in ihrem hinteren (in der Zeichnung links dargestellten) Teil eine Antriebsschraube auf. Die Drohne ist also mit einem eigenständigen Antriebssystem ausgestattet, wobei die Antriebsschraube hier über eine Rotorwelle 7 eines Elektromotors 3 angetrieben wird. Der Elektromotor 3 nimmt bei diesem Ausführungsbeispiel einen großen Teil des verfügbaren Innenraums der Drohne ein. Der vom Elektromotor 3 beanspruchte Platz kann jedoch prinzipiell auch kleiner ausfallen, beispielsweise um Platz für eine Steuereinheit zur Ansteuerung des Motors und übrige, hier nicht gezeigte Lenkeinheiten für die Drohne zur Verfügung zu stellen. Weiterhin kann auch ein hier ebenfalls nicht gezeigter Energiespeicher in Form einer Batterie oder einer Brennstoffzelle mit Brennstoffvorrat im Inneren der Drohne vorhanden sein. Alternativ kann ein Treibstofftank, beispielsweise ein Dieseltank, und ein Generator zur Versorgung des Motors mit elektrischer Energie vorgesehen sein. Oder aber, der Elektromotor 3 kann über ein hier nicht gezeigtes Elektrokabel mit elektrischer Energie versorgt werden.

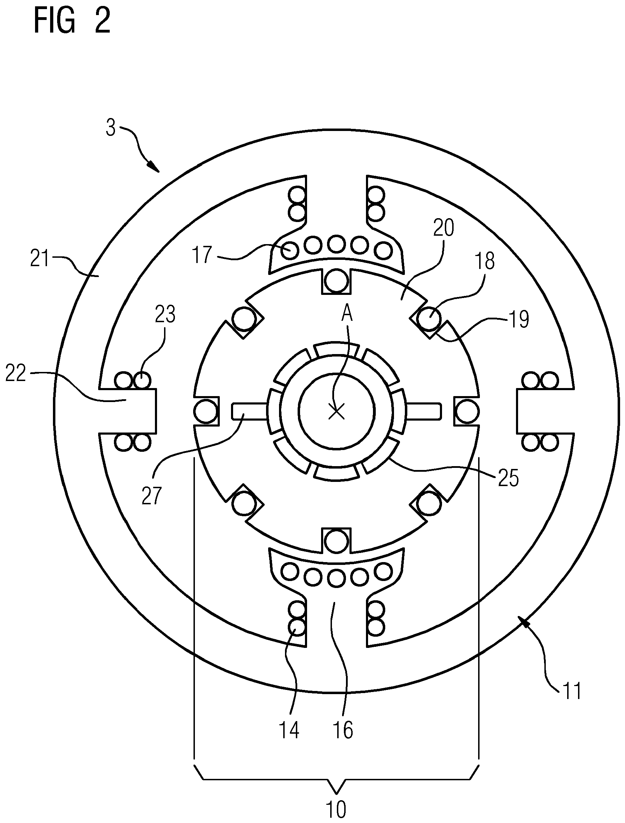

Der Elektromotor 3 weist einen Rotor 9 auf, der auf der Rotorwelle 7 angeordnet ist und so drehmomentschlüssig mit dieser gekoppelt ist, dass über die Rotorwelle 7 die Antriebsschraube 5 angetrieben werden kann. Der Elektromotor 3 weist weiterhin einen Stator 11 auf, der radial außerhalb des Rotors 9 angeordnet ist. Es handelt sich hier also um einen Innenrotormotor. Der außenliegende Stator trägt bei diesem Motor eine Erregereinrichtung, und der innenliegende Rotor trägt eine Ankerwicklung. Prinzipiell kann es sich bei dem Motor entweder um einen Gleichstrommotor oder um einen Synchronmotor handeln, wie im Zusammenhang mit den Figuren 2 bis 4 noch deutlicher werden wird.

Figur 2 zeigt einen schematischen Querschnitt eines solchen Elektromotors 3 in einem speziellen Ausführungsbeispiel der Drohne. Die außenliegende Stator 11 umgibt den innenliegenden Rotor 10 ringförmig, wobei der Rotor 10 um die zentrale Rotationsachse A drehbar gelagert ist. Dabei umfasst der innenliegende Rotor 10 einen Rotorträger 20. Dieser Rotorträger 20 weist im Bereich seiner außenliegenden Oberfläche eine Mehrzahl von Ankernuten 19 auf, in welche eine Ankerwicklung 18 eingebettet ist. Im radial weiter innen liegenden Bereich des Elektromotors sind ferner Bürsten 27 zur elektrischen Kontaktierung mit feststehenden Stromzuführungen vorgesehen. Außerdem ist hier ein Kommutator 25 angeordnet, welcher als mechanischer Wechselrichter wirkt, sodass eine an den feststehenden Stromzuführungen anliegende Gleichspannung innerhalb des Rotors periodisch ihr Vorzeichen wechselt. Die Bürsten 27 und der Kommutator 25 müssen nicht zwangsläufig auf derselben axialen Position angeordnet sein wie die übrigen in Figur 2 dargestellten Komponenten. Sie können gegebenenfalls auch axial versetzt zur Ankerwicklung angeordnet sein. Die Darstellung der Figur 2 ist in Bezug auf diese Elemente nur äußerst schematisch zu verstehen.

Der außenliegende Stator 11 umfasst einen Statorträger 21, welcher eine kreiszylindrische Außenkontur aufweist. Dieser Statorträger trägt eine Erregereinrichtung, die im gezeigten Beispiel zur Ausbildung eines zweipoligen Magnetfeldes ausgelegt ist. Die Polpaarzahl p beträgt hier also p = 1. In diesem Beispiel umfasst die Erregereinrichtung zwei Erregerspulen 14, welche auf einander gegenüberliegenden Polträgern 16 des Stators angeordnet sind. Diese Polträger 16 sind jeweils nach radial innen hin zu Polschuhen geformt und tragen jeweils zusätzlich eine Kompensationsspule 17 im Bereich dieser Polschuhe. Weiterhin weist der Statorträger 21 in Umfangsrichtung zwischen den beiden Polträgern 16 zwei Wendepolträger 22 auf, auf denen jeweils eine Wendepolspule 23 angeordnet ist. Die Kompensationsspulen 17 und Wendepolspulen 23 unterstützen dabei die räumliche Formung des insgesamt durch die Erregereinrichtung (und insbesondere die Erregerspulen 14) erzeugten magnetischen Erregerfeldes. Das so erzeugte magnetische Erregerfeld tritt wiederum in elektromagnetische Wechselwirkung mit dem innenliegenden Rotor 10 und insbesondere mit der darauf angeordneten Ankerwicklung 18. Durch diese elektromagnetische Wechselwirkung wird innerhalb des Elektromotors 3 eine Umwandlung von elektrischer Energie in die mechanische Energie der Rotation bewirkt. Zusätzlich wird durch diese elektromagnetische Wechselwirkung auch das magnetische Erregerfeld beeinflusst, sodass sich insgesamt ein übergeordnetes Magnetfeld B der elektrischen Maschine ergibt.

Bei dem Elektromotor 3 des gezeigten Ausführungsbeispiels ist der Statorträger 21 vollständig aus einem amagnetischen Material, beispielsweise einem amagnetischen Stahl ausgebildet. Hierdurch wird der magnetische Fluss im Unterschied zu typischerweise verwendeten Elektromotoren nicht innerhalb des Motors ringförmig geschlossen. Dies bewirkt vorteilhaft, dass der gebildete magnetische Fluss radial weit nach außen in Bereiche außerhalb des Stators vordringen kann und dort zur Auslösung von Magnetminen verwendet werden kann. Der radial weiter innen liegende Rotorträger 20 kann optional entweder auch aus einem amagnetischen Material gebildet sein oder aber er kann zur magnetischen Flussführung innerhalb des Rotors auch aus einem weichmagnetischen Material gebildet sein. Weichmagnetische Materialien im radial innenliegenden Bereich des Rotors 10 verhindern das Vordringen des Magnetfeldes in die radial weiter außen liegenden Bereiche außerhalb des Elektromotors nicht.

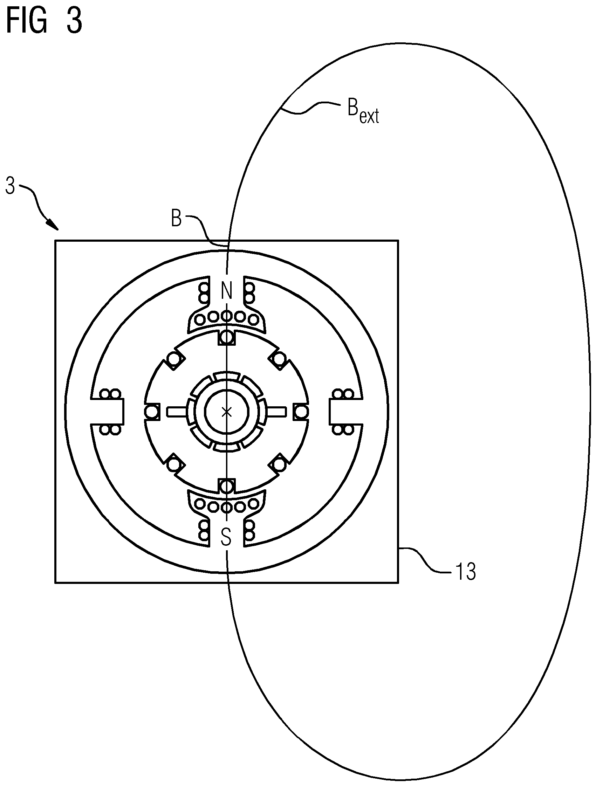

In Figur 3 ist eine verkleinerte Darstellung des Elektromotors 3 aus dem Beispiel der Figur 2 gezeigt, wobei zusätzlich zu den bisher beschriebenen Komponenten auch ein außenliegendes Motorgehäuse 13 gezeigt ist. Weiterhin ist eine beispielhafte Feldlinie für das durch Zusammenwirken von Rotor und Stator ausgebildete übergeordnete Magnetfeld B dargestellt. Dieses Magnetfeld B dringt auch in die Bereiche außerhalb des Motorgehäuses 13 vor und wird dort entsprechend mit Bₑₓₜ bezeichnet. Da das außerhalb des Elektromotors vorliegende Magnetfeld Bₑₓₜ im Wesentlichen durch das Erregerfeld des feststehenden Stators gegeben ist und durch die Wechselwirkung mit dem rotierenden Rotor nur geringfügig beeinflusst wird, handelt es sich hier um ein magnetisches Gleichfeld. Durch den Einfluss des Rotors kann die Amplitude jedoch periodisch variieren.

Das Motorgehäuse 13 weist hier einen rechteckigen Querschnitt auf. Alternativ dazu kann es aber auch einen runden, insbesondere kreisförmigen Querschnitt, aufweisen oder zumindest kann der Querschnitt abgerundete Ecken aufweisen oder als Vieleck mit mehr als vier Ecken ausgeformt sein, damit der Elektromotor 3 weniger Platz im Inneren der Drohne beansprucht. Der Elektromotor 3 ist jedenfalls insgesamt so ausgelegt, dass auch außerhalb des Motorgehäuses 13 ein externes Magnetfeld Bₑₓₜ mit einer zur Auslösung von Seeminen geeigneten magnetischen Flussdichte erzeugt werden kann. Es soll sich also um einen insgesamt besonders schwach abgeschirmten Elektromotor 3 handeln.

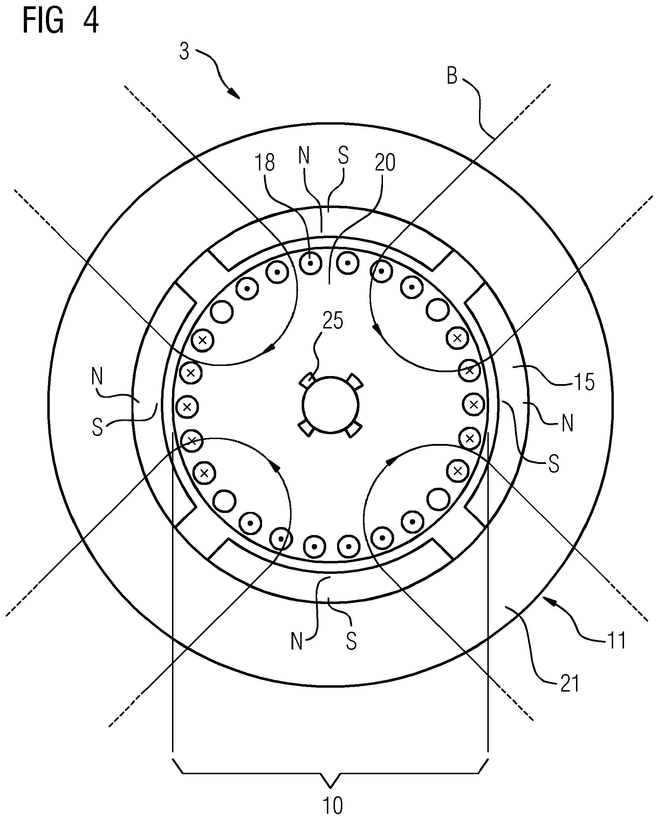

Figur 4 zeigt einen Elektromotor 3 nach einem weiteren Beispiel der Erfindung im schematischen Querschnitt. Auch dieser Elektromotor ist als Gleichstrommotor ausgebildet. Auch hier ist im Inneren des Elektromotors - gegebenenfalls an einer anderen axialen Position - ein Kommutator 25 vorgesehen sowie Bürstenkontakte, die in Figur 4 der Übersichtlichkeit halber nicht dargestellt sind. Im Unterschied zum Beispiel der Figuren 2 und 3 ist der Stator 11 dieses Elektromotors anstelle von Erregerspulen mit einer Mehrzahl von Permanentmagneten 15 als Erregereinrichtung ausgestattet. Im gezeigten Beispiel sind dies vier Permanentmagnete 15, welche innenliegend am Statorträger 21 angeordnet sind. Die Permanentmagnete 15 sind gleichmäßig über den Umfang des Stators verteilt und wechseln sich in ihrer radialen Orientierung der magnetischen Nordpole N und magnetischen Südpole S ab. Das auf diese Weise ausgebildete vierpolige Erregerfeld (p=2) tritt auch hier in elektromagnetische Wechselwirkung mit der auf dem Rotorträger 20 des Rotors 10 angeordneten Ankerwicklung 18. Ähnlich wie beim Beispiel der Figuren 2 und 3 ist auch hier der Statorträger 21 aus einem amagnetischen Material gebildet. Auf diese Weise wird erreicht, dass das insgesamt durch die elektrische Maschine 3 gebildete Magnetfeld B weit nach außen vordringen kann und auch außerhalb des Elektromotors ein starkes externes magnetisches Gleichfeld Bₑₓₜ erzeugt wird, welches zur Auslösung von Seeminen geeignet ist.

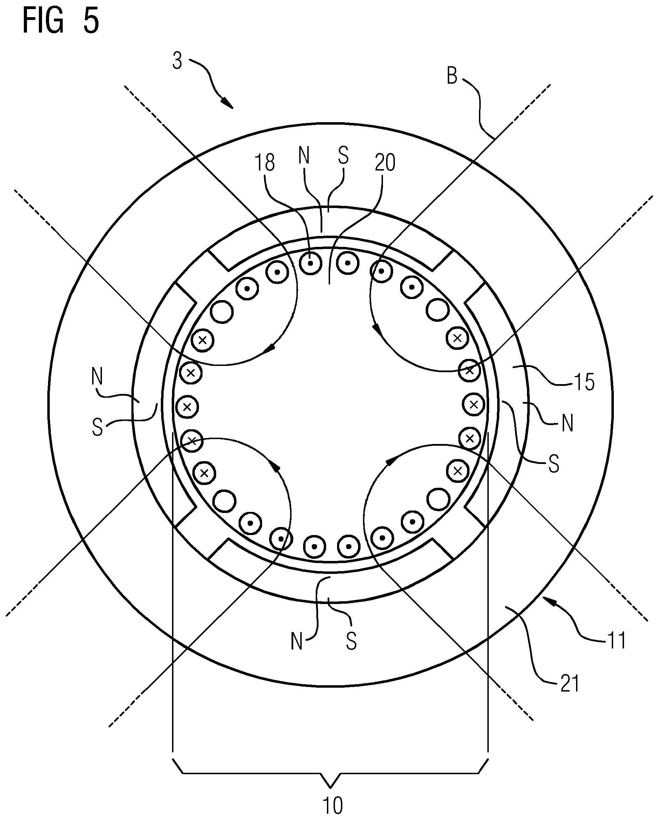

Figur 5 zeigt einen Elektromotor 3 nach einem weiteren Ausführungsbeispiel der Erfindung. Der Aufbau des Elektromotors ist insgesamt ähnlich wie beim vorhergehenden Beispiel. So ist auch hier ein außenliegender Stator 11 radial um einen innenliegenden Rotor 10 angeordnet, wobei der Stator 11 eine Erregereinrichtung aus vier Permanentmagneten 15 trägt und der Rotor 10 eine Ankerwicklung 18 trägt. Auch hier ist der Statorträger 21 aus einem amagnetischen Material gebildet, sodass das übergeordnete Magnetfeld B der Maschine weit nach radial außen vordringen kann. Im Unterschied zum Beispiel der Figur 4 ist hier jedoch der Elektromotor 3 als Synchronmotor ausgebildet und nicht als Gleichstrommotor. Entsprechend fehlt hier der Kommutator, und die Ankerwicklung 18 des Rotors 10 ist an eine hier nicht dargestellte Wechselstromquelle angeschlossen. Eine solche Wechselstromquelle kann beispielsweise auch durch eine Kombination aus einer Gleichstromquelle und einem Wechselrichter gebildet sein.

Die Permanentmagnete 15 aus den Beispielen der Figuren 4 und 5 können entweder als klassische Permanentmagnete (insbesondere mit Seltenen-Erd-Materialien) oder auch als supraleitende Permanentmagnete gebildet sein. Auf diese Weise können besonders starke Magnetfelder realisiert werden. Beim Beispiel der Figuren 2 und 3 kann die Erregerwicklung mit den Erregerspulen 14 als supraleitende Erregerwicklung realisiert sein.

### Bezugszeichenliste

- 1: Drohne
- 3: Elektromotor
- 5: Antriebsschraube
- 7: Rotorwelle
- 10: Rotor
- 11: Stator
- 13: Motorgehäuse
- 14: Erregerspule
- 15: Permanentmagnet
- 16: Polträger
- 17: Kompensationsspule
- 18: Ankerwicklung
- 19: Ankernut
- 20: Rotorträger
- 21: Statorträger
- 22: Wendepolträger
- 23: Wendepolspule
- 25: Kommutator
- 27: Bürste
- A: Rotationsachse
- B: Magnetfeld
- Bₑₓₜ: externes Magnetfeld
- N: Nordpol
- S: Südpol

## Patentansprüche

1. Drohne (1) zur Auslösung von Seeminen, welche einen Antrieb mit einem Elektromotor (3) zur Fortbewegung im Wasser aufweist,
- wobei dieser Elektromotor (3) beim Betrieb der Drohne (1) zusätzlich zur Auslösung der Seeminen nutzbar ist, mittels eines durch den Betrieb des Elektromotors (3) ausgebildeten externen Magnetfeldes (Bₑₓₜ),
- wobei der Elektromotor (3) einen feststehenden Stator (11) und einen im Verhältnis zum Stator (11) drehbar gelagerten Rotor (10) umfasst,
- wobei der Stator (11) wenigstens ein magnetisches und/oder elektromagnetisches Element (14,15) zur Ausbildung eines Erregerfeldes aufweist,
- wobei der Rotor (10) wenigstens eine Ankerwicklung (18) aufweist, die beim Betrieb des Elektromotors (3) elektromagnetisch in Wechselwirkung mit dem Erregerfeld tritt, wodurch ein übergeordnetes Magnetfeld (B) ausgebildet wird,
- und wobei das beim Betrieb außerhalb des Elektromotors (3) gebildete externe Magnetfeld (Bₑₓₜ) als magnetisches Gleichfeld ausgebildet ist.

2. Drohne (1) nach Anspruch 1, bei welcher der Elektromotor (3) so ausgebildet ist, dass der Rotor (10) radial innerhalb des Stators (11) angeordnet ist.

3. Drohne (1) nach Anspruch 1, bei welcher der Elektromotor (3) so ausgebildet ist, dass der Stator (11) radial innerhalb des Rotors (10) angeordnet ist.

4. Drohne (1) nach einem der vorhergehenden Ansprüche, bei welcher der Stator (11) einen Statorträger (21) aufweist und/oder der Rotor (10) einen Rotorträger (20) aufweist, wobei die magnetischen Eigenschaften des Statorträgers (21) und/oder des Rotorträgers (20) so ausgebildet sind, dass beim Betrieb des Elektromotors (3) ein magnetischer Fluss von wenigstens 0.5 mT in einen Bereich außerhalb des Elektromotors (3) vordringen kann.

5. Drohne (1) nach Anspruch 4, bei welcher der Statorträger (21) und/oder der Rotorträger (20) wenigstens abschnittsweise aus einem Material ausgebildet ist, welches eine effektive relative Permeabilitätszahl µᵣ von höchstens 300, insbesondere höchstens 10, aufweist.

6. Drohne (1) nach einem der vorstehenden Ansprüche, bei welcher der Elektromotor (3) als Gleichstrommotor ausgebildet ist.

7. Drohne (1) nach einem der Ansprüche 1 bis 5, bei welcher der Elektromotor (3) als Synchronmotor ausgebildet ist.

8. Drohne (1) nach einem der vorhergehenden Ansprüche, bei welcher das im Stator (11) angeordnete, wenigstens eine Element zur Ausbildung eines Erregerfeldes ein Permanentmagnet (15) ist.

9. Drohne (1) nach einem Ansprüche 1 bis 7, bei welcher das im Stator (11) angeordnete, wenigstens eine Element zur Ausbildung eines Erregerfeldes eine elektrische Erregerspule (14) ist.

10. Drohne (1) nach einem der vorhergehenden Ansprüche, bei welcher der Elektromotor (3) wenigstens ein supraleitendes Element (14,15) umfasst.

11. Drohne (1) nach Anspruch 10, bei welcher der Stator (11) wenigstens einen Block (15) aus supraleitendem Material umfasst, in welchem ein magnetischer Fluss derart aufgeprägt werden kann, dass der wenigstens eine Block wie ein Permanentmagnet wirkt.

12. Drohne (1) nach Anspruch 10 oder 11, bei welcher der Stator (11) wenigstens einen Block (15) umfasst, wobei jeder Block jeweils eine Mehrzahl gestapelter supraleitender Bandleiter umfasst, und wobei in dem jeweiligen Block ein magnetischer Fluss derart eingeprägt werden kann, dass der Block wie ein Permanentmagnet wirkt.

13. Drohne (1) nach einem der Ansprüche 10 bis 12, bei welcher der Stator wenigstens eine supraleitende Erregerspule (14) aufweist.

14. Drohne (1) nach einem der Ansprüche 10 bis 13, bei welcher die wenigstens eine Ankerwicklung (17) einen supraleitenden elektrischen Leiter aufweist.

15. Drohne (1) nach einem der Ansprüche 10 bis 14, bei welcher das wenigstens eine supraleitende Element (14,15) ein hochtemperatursupraleitendes Material, insbesondere Magnesiumdiborid und/oder ein Material des Typs REBa₂Cu₃Oₓ, umfasst.

## Claims

1. Drone (1) for triggering naval mines, which has a drive with an electric motor (3) for locomotion in the water,
- wherein this electric motor (3) can be additionally used during operation of the drone (1) for triggering the naval mines, by means of an external magnetic field (Bₑₓₜ) formed by the operation of the electric motor (3),
- wherein the electric motor (3) comprises a fixed stator (11) and a rotor (10) mounted rotatably in relation to the stator (11),
- wherein the stator (11) has at least one magnetic and/or electromagnetic element (14, 15) for forming an excitation field,
- wherein the rotor (10) has at least one armature winding (18), which during the operation of the electric motor (3) interacts electromagnetically with the excitation field, whereby a superordinate magnetic field (B) is formed,
- and wherein the external magnetic field (Bₑₓₜ) formed during operation outside the electric motor (3) is formed as a constant magnetic field.

2. Drone (1) according to Claim 1, in which the electric motor (3) is formed in such a way that the rotor (10) is arranged radially inside the stator (11).

3. Drone (1) according to Claim 1, in which the electric motor (3) is formed in such a way that the stator (11) is arranged radially inside the rotor (10).

4. Drone (1) according to one of the preceding claims, in which the stator (11) has a stator support (21) and/or the rotor (10) has a rotor support (20), wherein the magnetic properties of the stator support (21) and/or the rotor support (20) are designed in such a way that during the operation of the electric motor (3) a magnetic flux of at least 0.5 mT can spread into a region outside the electric motor (3).

5. Drone (1) according to Claim 4, in which the stator support (21) and/or the rotor support (20) is formed at least in some portions from a material that has an effective relative permeability number µᵣ of at most 300, in particular at most 10.

6. Drone (1) according to one of the preceding claims, in which the electric motor (3) is designed as a DC motor.

7. Drone (1) according to one of Claims 1 to 5, in which the electric motor (3) is designed as a synchronous motor.

8. Drone (1) according to one of the preceding claims, in which the at least one element arranged in the stator (11) for forming an excitation field is a permanent magnet (15).

9. Drone (1) according to one of Claims 1 to 7, in which the at least one element arranged in the stator (11) for forming an excitation field is an electrical excitation coil (14).

10. Drone (1) according to one of the preceding claims, in which the electric motor (3) comprises at least one superconducting element (14, 15).

11. Drone (1) according to Claim 10, in which the stator (11) comprises at least one block (15) of superconducting material which may be impressed with a magnetic flux in such a way that the at least one block acts like a permanent magnet.

12. Drone (1) according to Claim 10 or 11, in which the stator (11) comprises at least one block (15), wherein each block comprises in each case a plurality of stacked superconducting strip conductors, and wherein the respective block may be impressed with a magnetic flux in such a way that the block acts like a permanent magnet.

13. Drone (1) according to one of Claims 10 to 12, in which the stator has at least one superconducting excitation coil (14).

14. Drone (1) according to one of Claims 10 to 13, in which the at least one armature winding (17) has a superconducting electrical conductor.

15. Drone (1) according to one of Claims 10 to 14, in which the at least one superconducting element (14, 15) comprises a high-temperature superconducting material, in particular magnesium diboride and/or a material of the type REBa₂Cu₃Oₓ.

## Revendications

1. Drone (1) de déclenchement de mines marines, qui a un entraînement ayant un moteur (3) électrique pour la locomotion dans l'eau,
- dans lequel le moteur (3) électrique peut, lors du fonctionnement du drone (1), être utilisé en outre pour le déclenchement des mines marines, au moyen d'un champ (Bₑₓₜ) magnétique extérieur constitué par le fonctionnement du moteur (3) électrique,
- dans lequel le moteur (3) électrique comprend un stator (11) fixe et un rotor (10) monté tournant par rapport au stator (11),
- dans lequel le stator (11) a au moins un élément (14, 15) magnétique et/ou électromagnétique pour la constitution d'un champ d'excitation,
- dans lequel le rotor (10) a au moins un enroulement (18) d'induit, qui, lorsque le moteur (3) électrique est en fonctionnement, entre électromagnétiquement en interaction avec le champ d'excitation, grâce à quoi il est constitué un champ (B) magnétique prioritaire,
- et dans lequel le champ (Bₑₓₜ) magnétique extérieur formé en fonctionnement à l'extérieur du moteur (3) électrique est constitué sous la forme d'un champ magnétique continu.

2. Drone (1) suivant la revendication 1, dans lequel le moteur (3) est constitué de manière à ce que le rotor (10) soit radialement à l'intérieur du stator (11).

3. Drone (1) suivant la revendication 1, dans lequel le moteur (3) électrique est constitué de manière à ce que le stator (11) soit radialement à l'intérieur du rotor (10).

4. Drone (1) suivant l'une des revendications précédentes, dans lequel le stator (11) a un support (21) de stator et/ou le rotor (10) a un support (20) de rotor, dans lequel les propriétés magnétiques du support (21) de stator et/ou du support (20) de rotor sont telles que, lorsque le moteur (3) électrique est en fonctionnement, un flux magnétique d'au moins 0,5 mT pénètre dans une région à l'extérieur du moteur (3) électrique.

5. Drone (1) suivant la revendication 4, dans lequel le support (21) du stator et/ou le support (20) du rotor est constitué au moins en partie d'un matériau, qui a une perméabilité µᵣ relative de 300 au plus, notamment de 10 au plus.

6. Drone (1) suivant l'une des revendications précédentes, dans lequel le moteur (3) électrique est constitué sous la forme d'un moteur à courant continu.

7. Drone (1) suivant l'une des revendications 1 à 5, dans lequel le moteur (3) électrique est constitué sous la forme d'un moteur synchrone.

8. Drone (1) suivant l'une des revendications précédentes, dans lequel le au moins un élément, disposé dans le stator (11), de constitution d'un champ d'excitation est un aimant (15) permanent.

9. Drone (1) suivant l'une des revendications 1 à 7, dans lequel le au moins un élément, disposé dans le stator (11), de constitution d'un champ d'excitation est une bobine (14) électrique d'excitation.

10. Drone (1) suivant l'une des revendications précédentes, dans lequel le moteur (3) électrique comprend au moins un élément (14, 15) supraconducteur.

11. Drone (1) suivant la revendication 10, dans lequel le stator (11) comprend au moins un bloc (15) en matériau supraconducteur, dans lequel un flux magnétique peut être appliqué, de manière à ce que le au moins un bloc ait l'effet d'un aimant permanent.

12. Drone (1) suivant la revendication 10 ou 11, dans lequel le stator (11) comprend au moins un bloc (15), dans lequel chaque bloc comprend respectivement une pluralité de bandes supraconductrices empilées et dans lequel, dans le bloc respectif, un flux magnétique peut être appliqué, de manière à ce que le bloc ait l'effet d'un aimant permanent.

13. Drone (1) suivant l'une des revendications 10 à 12, dans lequel le stator a au moins une bobine (14) supraconductrice d'excitation.

14. Drone (1) suivant l'une des revendications 10 à 13, dans lequel le au moins un enroulement (17) d'induit a un conducteur électrique supraconducteur.

15. Drone (1) suivant l'une des revendications 10 à 14, dans lequel le au moins un élément (14, 15) supraconducteur comprend un matériau supraconducteur à haute température, notamment du diborure de magnésium et/ou un matériau du type REBa₂Cu₃Oₓ.
